# EUROPEAN PATENT APPLICATION

(11) **EP 4 691 824 A1**
(43) Date of publication of application: **11.02.2026**
(21) Application number: 24779802.8
(22) Date of filing: 21.03.2024
(51) Int. Cl.: B60K 35/23, G02B 27/01

(54) **IMAGE ILLUMINATING DEVICE**

(30) Priority: 27.03.2023 JP 2023050377
(71) Applicant: Koito Manufacturing Co., Ltd., Shinagawa-ku, Tokyo 141-0001 (JP)
(72) Inventor: ENDO, Masahiro, Shizuoka-shi, Shizuoka 424-8764 (JP)
(74) Representative: Zimmermann, Tankred Klaus
(86) International application number: PCT/JP2024/010915
(87) International publication number: WO 2024/203679

(57) **Abstract**

In an image illuminating device, the direction of a reflecting mirror that reflects light emitted from an image generation unit toward an image display unit can be accurately adjusted without difficulty. As an actuator 70 for turning a second reflecting mirror 40 that reflects light emitted from the image generation unit toward the image display unit about an axis Ax extending in a left-right direction, a linear motion output shaft 72 that reciprocates in an up-down direction is provided. In addition, the linear motion output shaft 72 is coupled to a lever member 46 fixed to the second reflecting mirror 40 via a bearing member 74 disposed so as to be turnably engaged with a tip end portion 72a. In this case, the bearing member 74 is configured to be attached to the lever member 46 in a manner displaceable in a device front-rear direction. As a result, even if the lever member 46 turns, a coupling state with the linear motion output shaft 72 is maintained without difficulty.

## Description

### TECHNICAL FIELD

The present invention relates to an image illuminating device configured to display a display image on an image display unit.

### BACKGROUND ART

Conventionally, as an in-vehicle image illuminating device, there has been known an image illuminating device configured to display a display image on an image display unit such as a front window (that is, windshield) or a light transmission plate disposed on the inside of a vehicle cabin in a state of being disposed in the vehicle cabin.

"Patent Literature 1" describes, as such an image illuminating device, one including an image generation unit that generates a display image, a reflecting mirror that reflects light emitted from the image generation unit toward an image display unit, and a housing that houses the reflecting mirror.

In the image illuminating device described in "Patent Literature 1", the reflecting mirror is supported so as to be turnable about an axis extending in a left-right direction relative to the housing, and an actuator for turning the reflecting mirror about the axis is supported on the housing. In this case, in the image illuminating device described in "Patent Literature 1", the actuator is coupled to the reflecting mirror via a drive force transmission mechanism disposed on the side of the reflecting mirror, so that the direction of the reflecting mirror can be adjusted.

### CITATION LIST

### PATENT LITERATURE

Patent Literature 1: WO 2020/110580 A

### SUMMARY OF INVENTION

### PROBLEMS TO BE SOLVED BY INVENTION

In the image illuminating device described in "Patent Literature 1" above, since the drive force transmission mechanism is configured by meshing a fan gear fixed to the reflecting mirror with a spur gear fixed to a rotation output shaft of the actuator, it is not always easy to accurately adjust the direction of the reflecting mirror in consideration of influence of occurrence of backlash or the like.

On the other hand, if the actuator includes a linear motion output shaft that reciprocates in an up-down direction and a tip end portion thereof is coupled to the reflecting mirror via the bearing member, the direction of the reflecting mirror can be accurately adjusted. In this case, it is desirable to configure such that a coupling state with the linear motion output shaft is maintained without difficulty even when the reflecting mirror turns.

Such a problem similarly occurs in an image illuminating device other than the in-vehicle image illuminating device.

The invention of the present application has been made in view of such circumstances, and an object thereof is to provide an image illuminating device configured to display a display image on an image display unit by light emitted from an image generation unit, the image illuminating device being capable of accurately adjusting, without difficulty, the direction of a reflecting mirror that reflects the light emitted from the image generation unit toward the image display unit.

### SOLUTION TO PROBLEMS

The invention of the present application achieves the above-described object by devising a peripheral structure of an actuator.

That is, an image illuminating device according to the invention of the present application is configured to display a display image on an image display unit,
which includes an image generation unit that generates the display image, a reflecting mirror that reflects light emitted from the image generation unit toward the image display unit, and a housing that houses the reflecting mirror. In the image illuminating device,
the reflecting mirror is supported so as to be turnable about an axis extending in a left-right direction relative to the housing,
an actuator for turning the reflecting mirror about the axis is supported on the housing,
the actuator includes a linear motion output shaft that reciprocates in an up-down direction,
the actuator is coupled to the reflecting mirror via a bearing member turnably engaged with a tip end portion of the linear motion output shaft, and
the bearing member is attached to the reflecting mirror in a manner displaceable in a device front-rear direction.

A specific application of the "image illuminating device" above is not particularly limited as long as it is configured to display the display image on the image display unit, and for example, applications such as an in-vehicle head-up display can be adopted.

A specific configuration of the "image display unit" above is not particularly limited as long as it is configured to display the display image, and for example, a front window of a vehicle, a light transmission plate disposed inside a vehicle cabin, or the like can be adopted.

A specific reflection surface shape and the like of the "reflecting mirror" above are not particularly limited as long as it is configured to reflect the light emitted from the image generation unit toward the image display unit.

Specific configuration and arrangement of the "actuator" above are not particularly limited as long as it includes the linear motion output shaft that reciprocates in the up-down direction, and is configured to be coupled to the reflecting mirror via the bearing member turnably engaged with the tip end portion of the linear motion output shaft.

A specific attachment structure of the "bearing member" above is not particularly limited as long as it is attached to the reflecting mirror in a manner displaceable in the device front-rear direction.

### EFFECTS OF INVENTION

The image illuminating device according to the invention of the present application includes the image generation unit that generates the display image, the reflecting mirror that reflects the light emitted from the image generation unit toward the image display unit, and the housing that houses the reflecting mirror. However, since the reflecting mirror is supported so as to be turnable about the axis extending in the left-right direction relative to the housing, and the actuator for turning the reflecting mirror about the axis is supported on the housing, the display image can be displayed at an appropriate position on the image display unit by drive of the actuator.

In this case, the actuator includes the linear motion output shaft which reciprocates in the up-down direction, and is coupled to the reflecting mirror via the bearing member disposed so as to be turnably engaged with the tip end portion of the linear motion output shaft. Therefore, the direction of the reflecting mirror can be accurately adjusted. Moreover, since the bearing member is attached to the reflecting mirror in a manner displaceable in the device front-rear direction, the coupling state with the linear motion output shaft can be maintained without difficulty even if the reflecting mirror turns.

As described above, according to the invention of the present application, in the image illuminating device configured to display the display image on the image display unit by the light emitted from the image generation unit, the direction of the reflecting mirror that reflects the light emitted from the image generation unit toward the image display unit can be adjusted accurately without difficulty.

Moreover, by adopting the configuration of the invention of the present application, it is possible to easily maintain the coupling state between the reflecting mirror and the linear motion output shaft even in a case where the reflecting mirror is greatly turned beyond the angular range in which the reflecting mirror is turned in a normal use state of the image illuminating device. Therefore, for example, if the reflecting mirror is greatly turned when the image illuminating device is not in use, it is possible to prevent, in advance, a situation in which sunlight or the like having entered an internal space of the housing is inadvertently reflected by the reflecting mirror and reaches the image generation unit. As a result, it is possible to prevent, in advance, an adverse effect on the function of the image generation unit.

In the configuration above, when the tip end portion of the linear motion output shaft of the actuator is formed in the spherical shape, it is possible to easily maintain the coupling state between the linear motion output shaft and the bearing member without difficulty even when the reflecting mirror turns.

Further, in the configuration above, when the bearing member is configured to be engaged with the tip end portion of the linear motion output shaft from both sides in the device front-rear direction, a process of engaging the bearing member and the linear motion output shaft with each other can be easily performed, and after such engagement, a state in which the reflecting mirror is supported so as to be turnable about the axis extending in the left-right direction relative to the housing can be easily maintained.

Further, in the configuration above, since the bearing member is configured to be engaged with the reflecting mirror on both left and right sides thereof, it is possible to easily maintain a state in which the reflecting mirror is supported so as to be turnable about the axis extending in the left-right direction in a state of the reflecting mirror being positioned with respect to the housing in the left-right direction.

Further, in the configuration above, if the lever member extending in the device front-rear direction is fixed to the reflecting mirror, the engagement hole is formed in the tip end portion of the lever member, and the bearing member is engaged with the lever member in a manner displaceable in the device front-rear direction in a state of being inserted into the engagement hole, even when the reflecting mirror turns, the coupling state with the linear motion output shaft can be easily maintained without difficulty, and the direction of the reflecting mirror can be accurately adjusted.

### BRIEF DESCRIPTION OF DRAWINGS

Fig. 1 is a side sectional view showing an image illuminating device according to an embodiment of the invention of the present application, which is mounted on a vehicle.
Fig. 2 is a view from a direction II in Fig. 1.
Fig. 3 is a detailed view of a portion III of Fig. 1.
Fig. 4 is a plan view showing the image illuminating device in a state of a second housing being removed.
Fig. 5 is a sectional view taken along line V-V of Fig. 4.
Fig. 6 is a view for explaining the features of the embodiment, which is similar to Fig. 5.
Fig. 7 is a perspective view showing a main portion of the image illuminating device.
Fig. 8 is an exploded perspective view of the main portion.

### DESCRIPTION OF EMBODIMENTS

Embodiments of the invention of the present application will be described hereinafter with reference to the drawings.

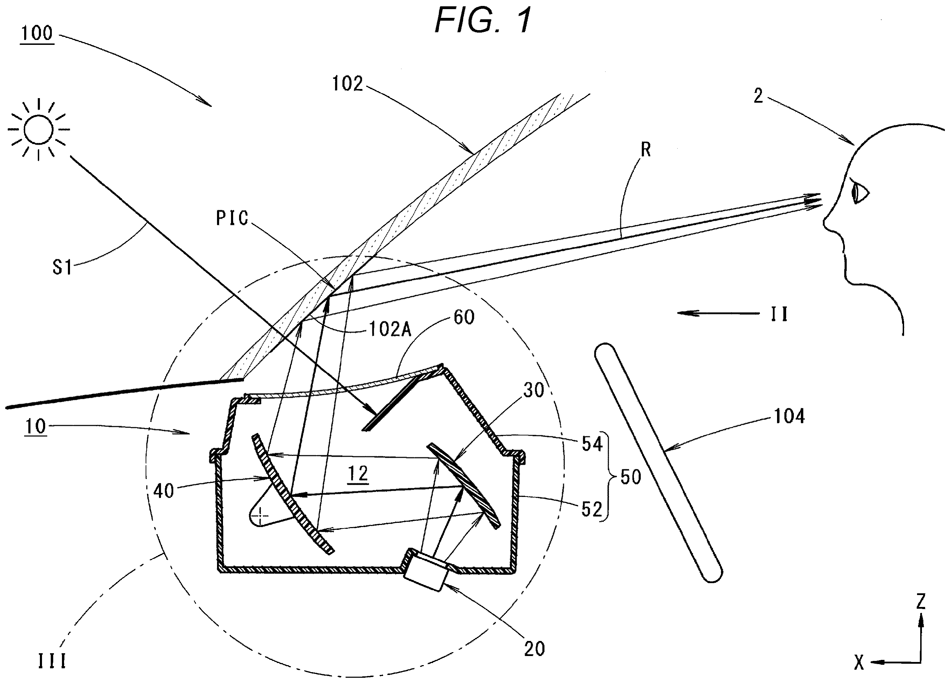

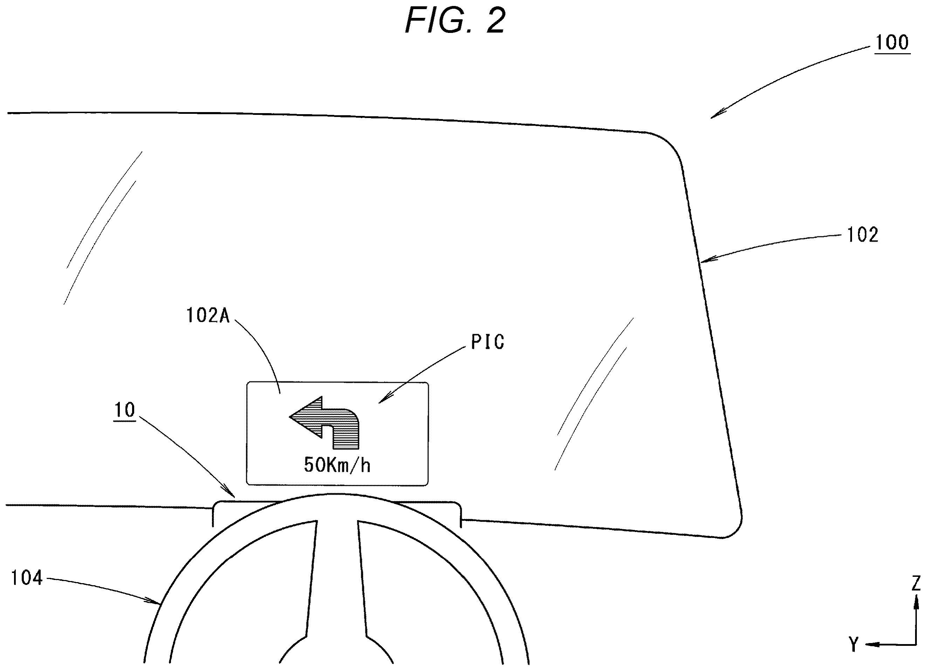

Fig. 1 is a side sectional view showing an image illuminating device 10 according to an embodiment of the present invention, which is mounted on a vehicle 100. Moreover, Fig. 2 is a view from a direction II of Fig. 1 indicated by an arrow.

In Figs. 1 and 2, a direction indicated by X is the "front" ("front" of the vehicle) of the image illuminating device 10, a direction indicated by Y is a "left direction" orthogonal to the "front", and a direction indicated by Z is an "up direction". The same also applies to the figures other than Figs. 1 and 2.

As shown in Figs. 1 and 2, the image illuminating device 10 according to the present embodiment is an in-vehicle head-up display, and is configured to display a display image PIC as a virtual image on an image display unit 102A set on the inner surface of a front window 102 in a state of being disposed in a vehicle cabin of the vehicle 100.

An optical path R shown in Fig. 1 is an optical path when a driver 2 visually recognizes the display image PIC displayed on the image display unit 102A by the image illuminating device 10.

The image display unit 102A is positioned in a lower region of the front window 102 and in a front region of a steering wheel 104, and is set as a horizontally long rectangular region. Thus, the driver 2 of the vehicle 100 can visually and easily recognize the display image PIC displayed on the image display unit 102A.

Note that Fig. 2 shows, as a specific example of the display image PIC, a state in which a vehicle speed (50 Km/h) is displayed together with a leftward arrow.

The image illuminating device 10 is disposed in front of the steering wheel 104 and in the vicinity of the lower portion of the front window 102.

As shown in Fig. 1, the image illuminating device 10 includes an image generation unit 20 that generates a display image which is a source of the display image PIC, first and second reflecting mirrors 30, 40 that sequentially reflect light emitted from the image generation unit 20 toward the image display unit 102A on the front window 102, a housing 50 that houses these components, and a translucent cover 60 attached to the housing 50.

The image generation unit 20 and the first and second reflecting mirrors 30, 40 are supported by the housing 50 (which will be described later).

The housing 50 has a configuration in which a second housing 54 is assembled to a first housing 52 formed so as to open upward.

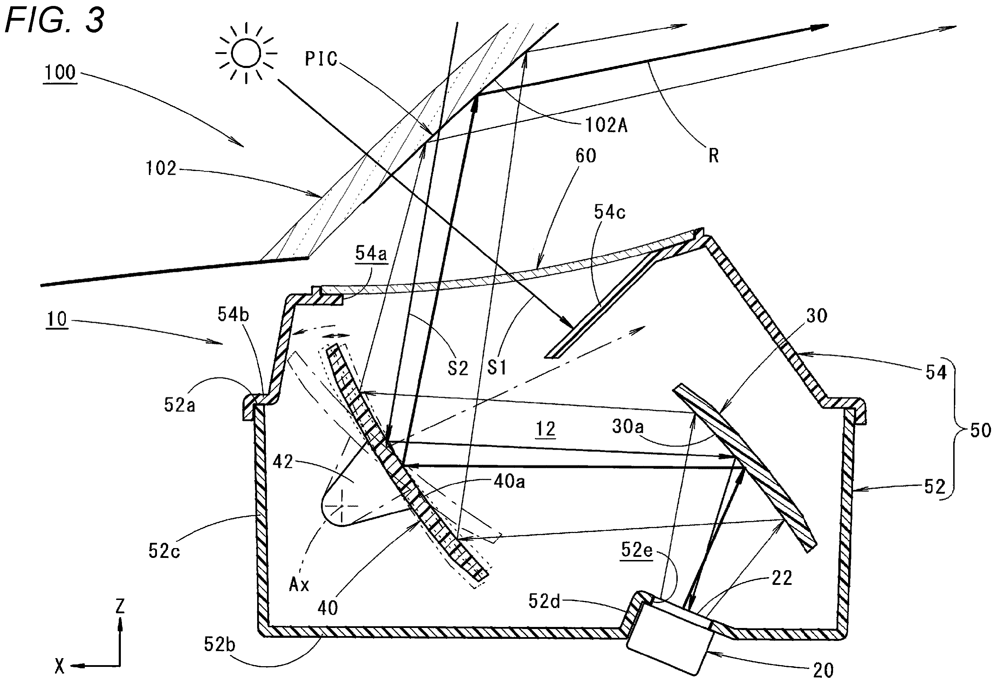

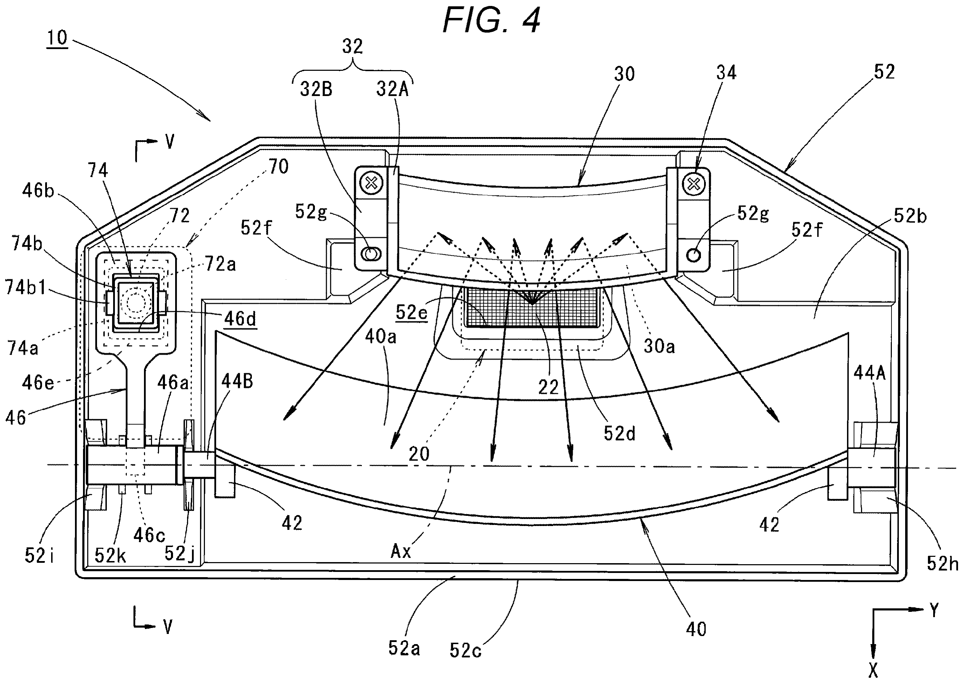

Fig. 3 is a detailed view of a portion III of Fig. 1. Moreover, Fig. 4 is a plan view showing the image illuminating device 10 in a state of the second housing 54 being removed.

As shown in Figs. 3 and 4, the second housing 54 has an outer peripheral flange portion 54b, and is assembled to the first housing 52 in a state of the outer peripheral flange portion 54b contacting an upper end opening 52a of the first housing 52.

Each of the first and second housings 52, 54 is formed of an opaque resin molded article. In the second housing 54, an opening 54a for transmitting the reflected light from the second reflecting mirror 40 to the image display unit 102A is formed.

The translucent cover 60 is formed of a colorless and transparent resin panel. The translucent cover 60 is disposed so as to cover the opening 54a of the second housing 54 in a state of being curved downward and slightly inclined upward toward the rear. The translucent cover 60 allows the reflected light from the second reflecting mirror 40 to enter the image display unit 102A, and secures the dust-proofness of an internal space 12 of the housing 50.

As shown in Fig. 4, reflection surfaces 30a, 40a of the first and second reflecting mirrors 30, 40 have symmetrical shapes, and the image generation unit 20 is disposed at a center position in the left-right direction thereof.

The image generation unit 20 includes a liquid crystal panel 22 having a rectangular outer shape, and is disposed such that the liquid crystal panel 22 faces the internal space 12 of the housing 50. Specifically, the image generation unit 20 is supported by a lower wall portion 52b of the first housing 52 in a state of the liquid crystal panel 22 being disposed such that the longitudinal direction thereof extends in the left-right direction (that is, vehicle width direction) and in a state of the liquid crystal panel 22 being directed obliquely upward and rearward.

The image generation unit 20 is configured to generate the display image (that is, image as the source of the display image PIC) on the liquid crystal panel 22 by performing backlight irradiation on the liquid crystal panel 22 from the back surface side thereof.

A unit attachment portion 52d for attaching the image generation unit 20 is formed at the lower wall portion 52b of the first housing 52. A rectangular opening 52e slightly larger than the outer shape of the liquid crystal panel 22 is formed in the unit attachment portion 52d.

The image generation unit 20 is fixed to the lower wall portion 52b of the first housing 52 by screwing or the like in a state of the liquid crystal panel 22 being disposed so as to be fitted into the opening 52e of the unit attachment portion 52d.

The first reflecting mirror 30 is disposed obliquely above and behind the image generation unit 20, and is configured to reflect the light emitted from the image generation unit 20 forward.

The first reflecting mirror 30 is configured as a saddle-type reflecting mirror in which the surface shape of the reflection surface 30a is a saddle-shaped curved surface. The reflection surface 30a of the first reflecting mirror 30 has a substantially rectangular outer shape extending in the left-right direction in vehicle front view. Specifically, the horizontal sectional shape of the reflection surface 30a is a convex curve, and the vertical sectional shape thereof is a concave curve.

The first reflecting mirror 30 has a configuration in which flange portions 32 are formed at both left and right end portions of the reflection surface 30a, and is fixed to the first housing 52 at such a pair of left and right flange portions 32.

Specifically, each flange portion 32 includes a side wall portion 32A formed so as to extend rearward from a side end portion of the reflection surface 30a along the vertical plane, and a stepped portion 32B formed so as to extend laterally from the outer surface of the side wall portion 32A. The first reflecting mirror 30 is fastened and fixed to a pair of left and right columnar projections 52f formed on the lower wall portion 52b of the first housing 52 with screws 34 in a state of being positioned and fastened with pins 52g at the pair of left and right stepped portions 32B.

As shown in Figs. 3 and 4, the second reflecting mirror 40 is disposed in front of the first reflecting mirror 30. The second reflecting mirror 40 is configured to reflect the light emitted from the image generation unit 20, which is reflected by the first reflecting mirror 30, upward.

The second reflecting mirror 40 is a concave mirror, and the surface shape of the reflection surface 40a thereof is a concave curved surface having a substantially spherical shape. The reflection surface 40a of the second reflecting mirror 40 has a rectangular outer shape extending in the left-right direction in vehicle front view. The reflection surface 40a of the second reflecting mirror 40 is formed to have a size larger than that of the reflection surface 30a of the first reflecting mirror 30, and is formed to have an aspect ratio larger than that of the reflection surface 30a of the first reflecting mirror 30.

As described above, the reflection surface 40a of the second reflecting mirror 40 is formed with the aspect ratio larger than that of the reflection surface 30a of the first reflecting mirror 30 in a state of being greatly curved in the direction of the image desired to be visually recognized by the driver 2. However, since the first reflecting mirror 30 is configured as the saddle-type reflecting mirror, the reflected light from the reflection surface 30a has small spread in the up-down direction and large spread in the left-right direction, so that the reflected light efficiently enters the reflection surface 40a of the second reflecting mirror 40.

The lower wall portion 52b of the first housing 52 is formed such that with respect to the position of a portion formed with the unit attachment portion 52d and the position of portions located below the reflection surfaces 30a, 40a and the first and second reflecting mirrors 30, 40, other portions are formed at a position one step higher.

As shown in Fig. 3, in the second housing 54, a light shielding piece portion 54c covering a peripheral region of the reflection surface 30a of the first reflecting mirror 30 is formed. The light shielding piece portion 54c is formed so as to extend in a plate shape obliquely downward and forward from the rear end edge of the opening 54a of the second housing 54.

In the image illuminating device 10, there is a case where sunlight S1 having entered the vehicle cabin via the front window 102 enters the internal space 12 of the housing 50 via the translucent cover 60. However, the light shielding action of the light shielding piece portion 54c prevents, in advance, the sunlight S1 from reaching the peripheral region of the reflection surface 30a of the first reflecting mirror 30.

As a result, even if a deposited film or the like adheres to the peripheral region of the reflection surface 30a when surface treatment for forming the reflection surface 30a of the first reflecting mirror 30 is performed, it is possible to prevent, in advance, the sunlight S1 having reached the peripheral region from being reflected as stray light by the deposited film or the like.

As shown in Fig. 4, the second reflecting mirror 40 is supported on the first housing 52 so as to be turnable about an axis Ax extending in the left-right direction in the vicinity of the front of the second reflecting mirror 40. As a result, the second reflecting mirror 40 is capable of performing angle adjustment for accurately making the reflected light from the first reflecting mirror 30 incident on the image display unit 102A of the front window 102.

In order to achieve this configuration, a pair of left and right vertical flange portions 42 extending forward along the vertical plane is formed at both left and right side end portions of the reflection surface 40a of the second reflecting mirror 40 on the back surface side thereof. In the pair of left and right vertical flange portions 42, first and second shaft portions 44A, 44B extending in both the left and right directions (that is, direction away from the reflection surface 40a) on the axis Ax are formed.

Each of the first and second shaft portions 44A, 44B is formed in a circular columnar shape. In this case, the second shaft portion 44B located on the right side (left side in device front view) is formed to have an outer diameter smaller than that of the first shaft portion 44A located on the left side, but a tip end portion thereof is formed to have the same outer diameter as that of the first shaft portion 44A.

A base end portion 46a of a lever member 46 extending rearward is fixed to the tip end surface of the second shaft portion 44B. The base end portion 46a of the lever member 46 is formed so as to extend in a circular columnar shape coaxially with the second shaft portion 44B, and the outer diameter thereof is set to the same value as that of the tip end portion of the second shaft portion 44B.

A tip end portion 46b of the lever member 46 is coupled to a linear motion output shaft 72 of an actuator 70 for turning the second reflecting mirror 40 about the axis Ax (this will be described later).

The first and second shaft portions 44A, 44B are mounted on a pair of left and right mount portions 52h, 52j formed at the lower wall portion 52b of the first housing 52.

The left mount portion 52h is formed so as to extend in the axis Ax direction from the inner surface of a peripheral wall portion 52c of the first housing 52. The upper surface of the mount portion 52h is formed in a substantially U-shape, and a lower end portion thereof is formed of a semi-cylindrical surface having substantially the same inner diameter as the outer diameter of the first shaft portion 44A.

The right mount portion 52j is formed at a position away from the peripheral wall portion 52c of the first housing 52. The mount portion 52j is formed as a rib protruding upward along the vertical plane extending in the device front-rear direction from the lower wall portion 52b of the first housing 52. The upper surface of the mount portion 52j is formed in a substantially U-shape, and a lower end portion thereof is formed of a semi-cylindrical surface having substantially the same inner diameter as the outer diameter of the base end portion 46a of the lever member 46.

The base end portion 46a of the lever member 46 is mounted on a mount portion 52i formed at the peripheral wall portion 52c of the first housing 52. The upper surface of the mount portion 52i is formed in a substantially U-shape, and a lower end portion thereof is formed of a semi-cylindrical surface having substantially the same inner diameter as that of the base end portion 46a of the lever member 46.

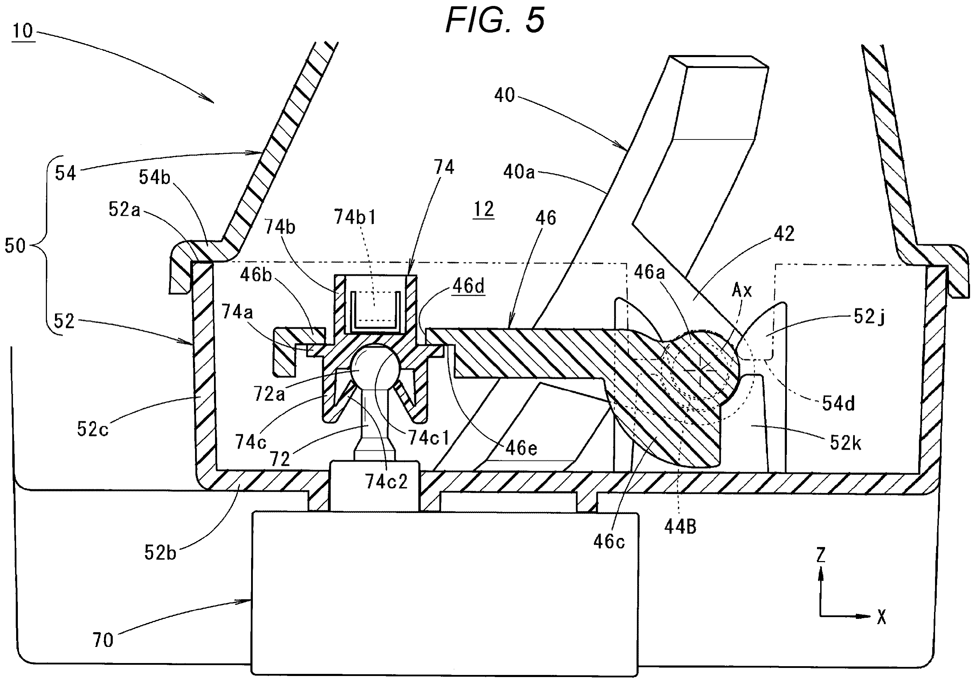

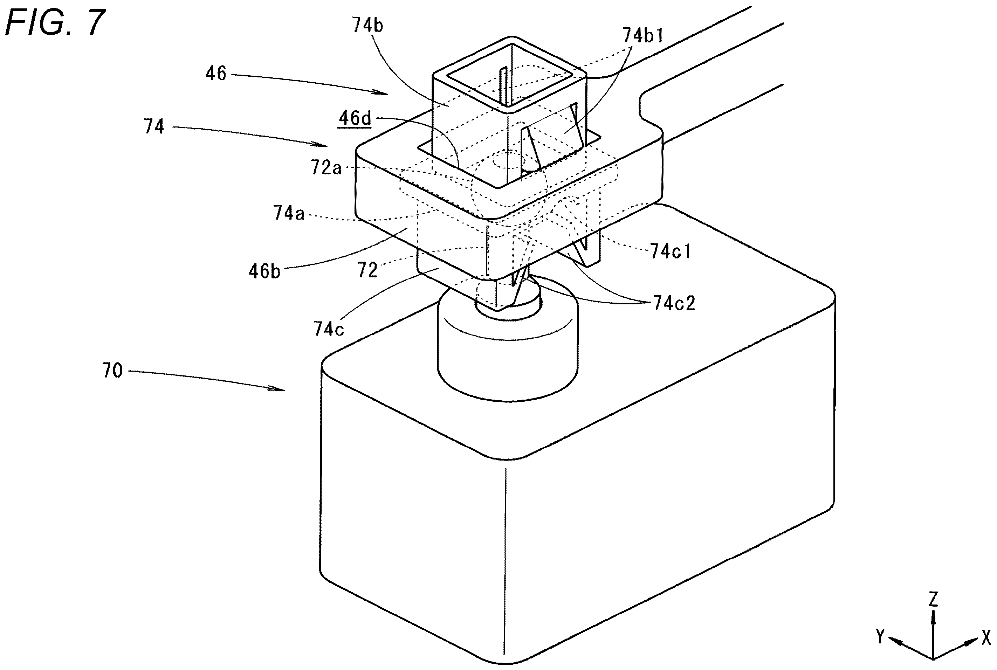

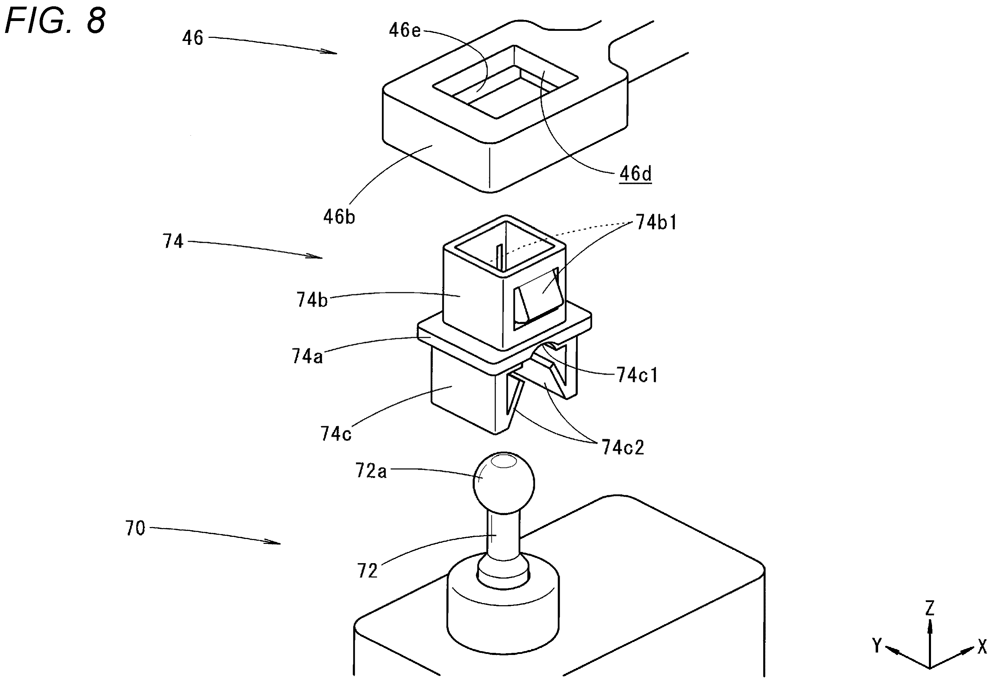

Fig. 5 is a sectional view taken along line V-V of Fig. 4. Moreover, Fig. 7 is a perspective view showing a main portion of the image illuminating device 10, and Fig. 8 is an exploded perspective view thereof.

As indicated by a two-dot chain line in Fig. 5, the second housing 54 is formed with a contact portion 54d for positioning the second reflecting mirror 40 by contacting the base end portion 46a of the lever member 46 from above. The contact portion 54d is formed as a rib protruding downward from the outer peripheral flange portion 54b of the second housing 54, and the lower end surface thereof is formed with a semi-cylindrical recess having substantially the same inner diameter as the outer diameter of the base end portion 46a of the lever member 46. Note that a contact portion (not shown) similar to the contact portion 54d is also formed on the left side of the second housing 54.

The base end portion 46a of the lever member 46 is formed with a tab 46c protruding downward, and on the other hand, the lower wall portion 52b of the first housing 52 is formed with a pair of left and right sandwiching portions 52k protruding upward. In this case, the tab 46c is formed so as to extend along the vertical plane extending in the device front-rear direction, and the pair of left and right sandwiching portions 52k is formed and positioned on both left and right sides of the tab 46c. The tab 46c and the pair of left and right sandwiching portions 52k are engaged with each other, so that the second reflecting mirror 40 is positioned with respect to the first housing 52 in the left-right direction.

The actuator 70 is fixed to the lower wall portion 52b of the first housing 52 on the lower side thereof by screw fastening or the like.

The linear motion output shaft 72 of the actuator 70 is formed so as to extend vertically upward to the internal space 12 of the housing 50, and a tip end portion 72a thereof is formed in a spherical shape. The linear motion output shaft 72 is coupled to the tip end portion 46b of the lever member 46 via a bearing member 74 disposed so as to turnably engage with the tip end portion 72a.

The bearing member 74 is attached to the lever member 46 so as to be displaceable in the device front-rear direction. Specifically, an engagement hole 46d having a rectangular opening shape elongated in the device front-rear direction in plan view is formed in the tip end portion 46b of the lever member 46. The bearing member 74 is inserted into the engagement hole 46d and engaged with the lever member 46 so as to be displaceable in the device front-rear direction.

In order to achieve this configuration, in the lever member 46, a rectangular recess 46e slightly larger than the engagement hole 46d is formed in the lower surface of the tip end portion 46b, and on the other hand, in the bearing member 74, a horizontal flange portion 74a contacting the rectangular recess 46e from below is formed around the engagement hole 46d of the lever member 46. The horizontal flange portion 74a has a rectangular outer shape elongated in the device front-rear direction.

The bearing member 74 has an upper half portion 74b extending in a rectangular tubular shape upward in the vertical direction from the horizontal flange portion 74a, and a pair of engagement pieces 74b1 protruding to the outer surface side is formed on both left and right wall portions thereof. When the horizontal flange portion 74a of the bearing member 74 contacts the rectangular recess 46e of the lever member 46 from below in a state of the upper half portion 74b being inserted into the engagement hole 46d of the lever member 46, the pair of left and right engagement pieces 74b1 is engaged with the upper surface of the tip end portion 46b of the lever member 46.

As a result, displacement of the bearing member 74 relative to the lever member 46 in the device front-rear direction can be performed in a state in which the tip end portion 46b of the lever member 46 is sandwiched from both upper and lower sides by the horizontal flange portion 74a and the pair of left and right engagement pieces 74b1.

A lower half portion 74c of the bearing member 74 extends downward in the vertical direction as a pair of front and rear wall surface portions from the horizontal flange portion 74a, a cylindrical recess 74c1 extending in a substantially semi-cylindrical surface shape in the left-right direction is formed in a ceiling surface located therebetween, and a pair of engagement pieces 74c2 protruding to the inner surface side toward the cylindrical recess 74c1 is formed at lower end portions of the pair of front and rear wall surface portions. The bearing member 74 is engaged with the tip end portion 72a of the linear motion output shaft 72 of the actuator 70 when the tip end portion 72a is inserted laterally into a space between the pair of front and rear engagement pieces 74c2 and the cylindrical recess 74c1 in the lower half portion 74c, and is thereby coupled to the linear motion output shaft 72 so as to be turnable about the axis extending in the left-right direction.

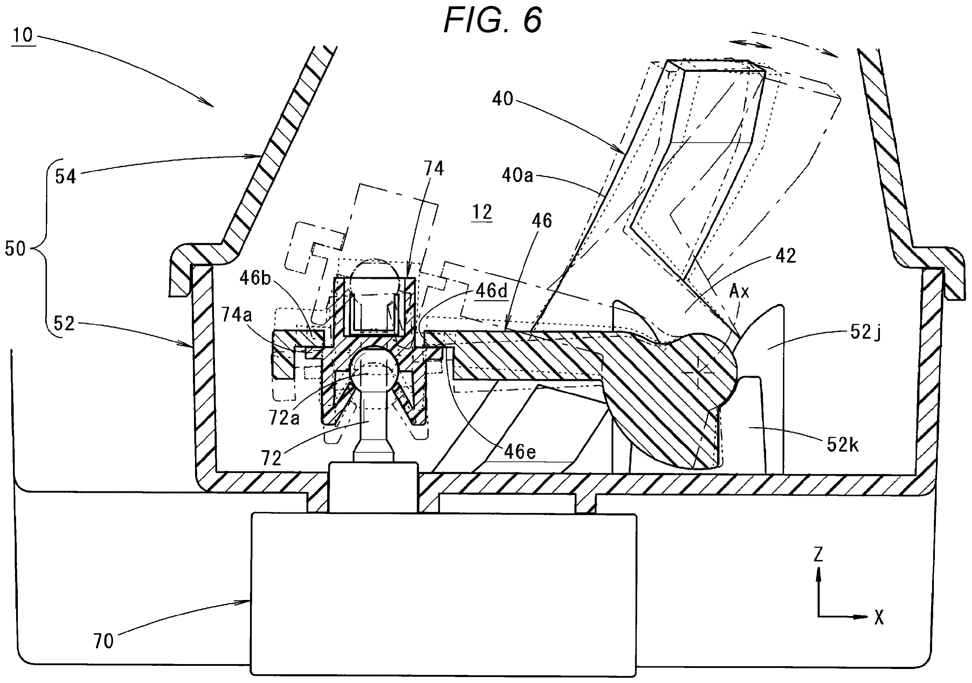

Fig. 6 is a view for explaining the features of the present embodiment, which is similar to Fig. 5.

As shown in Figs. 3 and 6, in the image illuminating device 10 according to the present embodiment, the linear motion output shaft 72 reciprocates in the up-down direction by drive of the actuator 70, the lever member 46 connected to the tip end portion 72a via the bearing member 74 turns about the axis Ax, and the second reflecting mirror 40 turns about the axis Ax together with the lever member 46. Then, by appropriately turning the second reflecting mirror 40 about the axis Ax in this manner, the direction in which the light emitted from the image generation unit 20 and arriving from the first reflecting mirror 30 is reflected by the second reflecting mirror 40 is adjusted in the device front-rear direction, so that the display image PIC is displayed at an appropriate position on the image display unit 102A of the front window 102.

In Fig. 3, a broken line indicates a state in which the second reflecting mirror 40 turns forward about the axis Ax, and a two-dot chain line indicates a state in which the second reflecting mirror 40 turns rearward about the axis Ax.

In a normal use state, the image illuminating device 10 is configured such that the second reflecting mirror 40 turns in a relatively small angular range (specifically, an angular range of about ±3° as indicated by the broken line and the two-dot chain line) in the device front-rear direction from a reference position indicated by a solid line in Fig. 3, but when not in use, the second reflecting mirror 40 turns greatly (for example, about 15 to 20°) forward from the reference position as indicated by a one-dot chain line in Fig. 3.

As a result, even if sunlight S2 having entered the internal space 12 of the housing 50 from a direction different from that of the sunlight S1 is reflected by the reflection surface 40a of the second reflecting mirror 40 when the image illuminating device 10 is not in use, as indicated by the solid line in Fig. 3, this reflected light is prevented, in advance, from being reflected by the reflection surface 30a of the first reflecting mirror 30 and reaching the liquid crystal panel 22 of the image generation unit 20. That is, when the image illuminating device 10 is not in use, as indicated by the one-dot chain line in Fig. 3, the second reflecting mirror 40 greatly turns forward from the reference position, and the sunlight S2 having reached the reflection surface 40a is light directed to a space above the first reflecting mirror 30, and thus does not reach the liquid crystal panel 22 of the image generation unit 20.

As shown in Fig. 6, while the linear motion output shaft 72 reciprocates in the up-down direction by drive of the actuator 70, the lever member 46 turns about the axis Ax, and accordingly, the bearing member 74 engaged with both the tip end portion 72a of the linear motion output shaft 72 and the tip end portion 46b of the lever member 46 is relatively displaced in the device front-rear direction such that the horizontal flange portion 74a slides on the ceiling surface of the rectangular recess 46e of the lever member 46, thereby absorbing misalignment of the coupling position in the device front-rear direction.

At this time, in the turn range of the image illuminating device 10 in the normal use state, a relative displacement amount in the device front-rear direction is not so large as indicated by a broken line and a two-dot chain line in Fig. 6, but since the lever member 46 greatly turns upward from the reference position when not in use, the bearing member 74 is greatly displaced rearward with respect to the lever member 46 as indicated by a one-dot chain line in Fig. 6. However, even in such a case, since the horizontal flange portion 74a of the bearing member 74 falls within the relative displacement amount within the range in which the horizontal flange portion 74a slides on the rectangular recess 46e of the lever member 46, excessive force does not act between the linear motion output shaft 72 of the actuator 70 and the lever member 46.

Next, the features of the present embodiment will be described.

The image illuminating device 10 according to the present embodiment includes the image generation unit 20 that generates the display image as the source of the display image PIC, the first and second reflecting mirrors 30, 40 that sequentially reflect the light emitted from the image generation unit 20 toward the image display unit 102A of the front window 102, and the housing 50 that houses the first and second reflecting mirrors 30, 40. However, since the second reflecting mirror 40 is supported so as to be turnable about the axis Ax extending in the left-right direction relative to the housing 50, and the actuator 70 for turning the second reflecting mirror 40 about the axis Ax is supported by the housing 50, the display image PIC can be displayed at an appropriate position on the image display unit 102A by drive of the actuator 70.

At this time, the actuator 70 includes the linear motion output shaft 72 which reciprocates in the up-down direction, and is coupled to the lever member 46 fixed to the second reflecting mirror 40 via the bearing member 74 disposed so as to be turnably engaged with the tip end portion 72a of the linear motion output shaft 72. Therefore, the direction of the second reflecting mirror 40 can be accurately adjusted by turn of the lever member 46. Moreover, since the bearing member 74 is attached to the lever member 46 in a manner displaceable in the device front-rear direction, the coupling state with the linear motion output shaft 72 can be maintained without difficulty even if the lever member 46 turns.

As described above, according to the present embodiment, in the image illuminating device 10 configured to display the display image PIC on the image display unit 102A by the light emitted from the image generation unit 20, the direction of the second reflecting mirror 40 that reflects the light emitted from the image generation unit 20 toward the image display unit 102A can be adjusted accurately without difficulty.

Moreover, the image illuminating device 10 according to the present embodiment is configured such that a proper coupling state between the lever member 46 fixed to the second reflecting mirror 40 and the linear motion output shaft 72 of the actuator 70 is maintained even in a case where the second reflecting mirror 40 greatly turns beyond the angular range in which the second reflecting mirror 40 turns in the normal use state of the image illuminating device 10. Therefore, by turning the second reflecting mirror 40 greatly from the reference position when the image illuminating device 10 is not in use, it is possible to prevent, in advance, occurrence of a situation in which the sunlight S2 having entered the internal space 12 of the housing 50 is inadvertently reflected by the second reflecting mirror 40 and reaches the image generation unit 20, and it is possible to prevent, in advance, an adverse effect on the function of the image generation unit 20.

In the present embodiment, since the tip end portion 72a of the linear motion output shaft 72 of the actuator 70 is formed in the spherical shape, it is possible to easily maintain the coupling state between the linear motion output shaft 72 and the bearing member 74 without difficulty even when the second reflecting mirror 40 turns.

Further, in the present embodiment, since the bearing member 74 is configured to be engaged with the tip end portion 72a of the linear motion output shaft 72 from both sides in the device front-rear direction, a process of engaging the bearing member 74 and the linear motion output shaft 72 with each other can be easily performed, and after such engagement, a state in which the second reflecting mirror 40 is supported so as to be turnable about the axis Ax extending in the left-right direction relative to the housing 50 can be easily maintained.

Further, in the present embodiment, since the bearing member 74 is configured to be engaged with the lever member 46 on both left and right sides thereof, it is possible to easily maintain a state in which the second reflecting mirror 40 is supported so as to be turnable about the axis Ax extending in the left-right direction in a state of the second reflecting mirror 40 being positioned with respect to the housing 50 together with the lever member 46 in the left-right direction.

Further, in the present embodiment, the lever member 46 extending in the device front-rear direction is fixed to the second reflecting mirror 40, and the engagement hole 46d is formed in the tip end portion 46b thereof, and the bearing member 74 is engaged with the lever member 46 in a manner displaceable in the device front-rear direction in a state of being inserted into the engagement hole 46d of the lever member 46. Therefore, even when the second reflecting mirror 40 turns, the coupling state with the linear motion output shaft 72 can be maintained without difficulty, and the direction of the second reflecting mirror 40 can be accurately adjusted.

In the above-described embodiment, it has been described that the linear motion output shaft 72 of the actuator 70 is disposed in a state of facing upward in the vertical direction. However, it is also possible to adopt a configuration in which the linear motion output shaft 72 is disposed in a state of facing a direction slightly inclined from the vertical direction. Even in a case where such a configuration is adopted, it is possible to obtain substantially the same features and effects as those of the above-described embodiment.

In the above-described embodiment, it has been described that the linear motion output shaft 72 of the actuator 70 is coupled to the lever member 46 fixed to the second reflecting mirror 40 via the bearing member 74 disposed so as to be turnably engaged with the tip end portion 72a thereof. However, it is possible to adopt a configuration in which the linear motion output shaft 72 is directly coupled to the second reflecting mirror 40 via the bearing member 74.

In the above-described embodiment, it has been described that the first and second reflecting mirrors 30, 40 are provided. However, it is possible to adopt a configuration including a single reflecting mirror (specifically, only the second reflecting mirror 40). Even in a case where such a configuration is adopted, it is possible to obtain substantially the same features and effects as those of the above-described embodiment.

In the above-described embodiment, it has been described that the image display unit 102A is set on the inner surface of the front window 102, but the image display unit may be formed of a light transmission plate or the like disposed on the front window 102 inside the vehicle cabin.

In the above-described embodiment, the image illuminating device 10 has been described as the in-vehicle head-up display. However, the image illuminating device 10 may be used for other purposes.

Note that the numerical values indicated as the specifications in the above-described embodiment are merely examples, and naturally the numerical values may be set at different values as appropriate.

Moreover, the invention of the present application is not limited to the configurations described in the above-described embodiment, and it is possible to adopt a configuration to which various modifications are added other than the configurations described above.

The present international application claims priority based on Japanese Patent Application No. 2023-050377 filed on March 27, 2023, and the entire contents of Japanese Patent Application No. 2023-050377 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

- 2: Driver
- 10: Image Illuminating Device
- 12: Internal Space
- 20: Image Generation Unit
- 22: Liquid Crystal Panel
- 30: First Reflecting Mirror
- 30a, 40a: Reflection Surface
- 32: Flange Portion
- 32A: Side Wall Portion
- 32B: Stepped Portion
- 34: Screw
- 40: Second Reflecting Mirror
- 42: Vertical Flange Portion
- 44A: First Shaft Portion
- 44B: Second Shaft Portion
- 46: Lever Member
- 46a: Base End Portion
- 46b: Tip End Portion
- 46c: Tab
- 46d: Engagement Hole
- 46e: Rectangular Recess
- 50: Housing
- 52: First Housing
- 52a: Upper End Opening
- 52b: Lower Wall Portion
- 52c: Peripheral Wall Portion
- 52d: Unit Attachment Portion
- 52e, 54a: Opening
- 52f: Columnar Projection
- 52g: Pin
- 52h, 52i, 52j: Mount Portion
- 52k: Sandwiching Portion
- 54: Second Housing
- 54b: Outer Peripheral Flange Portion
- 54c: Light Shielding Piece Portion
- 54d: Contact Portion
- 60: Translucent Cover
- 70: Actuator
- 72: Linear Motion Output Shaft
- 72a: Tip End Portion
- 74: Bearing Member
- 74a: Horizontal Flange Portion
- 74b: Upper Half Portion
- 74b1: Engagement Piece
- 74c: Lower Half Portion
- 74c1: Cylindrical Recess
- 74c2: Engagement Piece
- 100: Vehicle
- 102: Front Window
- 102A: Image Display Unit
- 104: Steering Wheel
- Ax: Axis
- PIC: Display Image
- R: Optical Path
- S1, S2: Sunlight

## Claims

1. An image illuminating device configured to display a display image on an image display unit, comprising:
an image generation unit that generates the display image; a reflecting mirror that reflects light emitted from the image generation unit toward the image display unit; and a housing that houses the reflecting mirror, wherein
the reflecting mirror is supported so as to be turnable about an axis extending in a left-right direction relative to the housing,
an actuator for turning the reflecting mirror about the axis is supported on the housing,
the actuator includes a linear motion output shaft that reciprocates in an up-down direction,
the actuator is coupled to the reflecting mirror via a bearing member turnably engaged with a tip end portion of the linear motion output shaft, and
the bearing member is attached to the reflecting mirror in a manner displaceable in a device front-rear direction.

2. The image illuminating device according to claim 1, wherein the tip end portion of the linear motion output shaft is formed in a spherical shape.

3. The image illuminating device according to claim 1 or 2, wherein the bearing member is configured to be engaged with the tip end portion of the linear motion output shaft from both sides in the device front-rear direction.

4. The image illuminating device according to claim 1 or 2, wherein the bearing member is configured to be engaged with the reflecting mirror on both left and right sides of the bearing member.

5. The image illuminating device according to claim 1 or 2, wherein a lever member extending in the device front-rear direction is fixed to the reflecting mirror,
an engagement hole is formed in a tip end portion of the lever member, and
the bearing member is engaged with the lever member in a manner displaceable in the device front-rear direction in a state of being inserted into the engagement hole.
